# EUROPEAN PATENT APPLICATION

(11) **EP 4 468 036 A1**
(43) Date of publication of application: **27.11.2024**
(21) Application number: 23743183.8
(22) Date of filing: 13.01.2023
(51) Int. Cl.: G01S 17/89, G01S 17/46, G06T 1/00

(54) **INFORMATION PROCESSING DEVICE, CONTROL METHOD, PROGRAM, AND STORAGE MEDIUM**

(30) Priority: 21.01.2022 JP 2022007785
(71) Applicant: Pioneer Corporation, Tokyo 113-0021 (JP); Pioneer Smart Sensing Innovations Corporation, Tokyo 113-0021 (JP)
(72) Inventor: SUZUKI, Masami, Kawagoe-shi, Saitama 350-8555 (JP); MATSUMOTO, Reiji, Kawagoe-shi, Saitama 350-8555 (JP)
(74) Representative: Viering, Jentschura & Partner mbB Patent- und Rechtsanwälte
(86) International application number: PCT/JP2023/000778
(87) International publication number: WO 2023/140189

(57) **Abstract**

The controller 13 of the information processing device 1 is configured to acquire integrated point cloud data which is three-dimensional data of a target object of measurement generated based on point cloud data, which is generated by a plurality of lidars 3 configured to measure a space where the target object of measurement is placed. Then, the controller 13 detects an interpolation target grid which is missing in the integrated point cloud data. Then, based on a gradient angle of the target object of measurement with respect to each of plural directions at the interpolation target spot, the controller 13 is configured to determine a candidate height to interpolate the interpolation target grid with respect to each of the plural directions. Then, the controller 13 is configured to generate interpolation data corresponding to the interpolation target grid based on the candidate height.

## Description

### TECHNICAL FIELD

The present disclosure relates to processing of measured data.

### BACKGROUND

Conventionally, there is known a laser radar device configured to radiate a pulse of laser light into a target space of detection and detect an object in the target space based on the level of the reflection light. For example, Patent Literature 1 discloses a lidar configured to scan the peripheral space by appropriately controlling the emitting direction (scanning direction) of the light pulse to be repeatedly emitted and measure the return light thereby to generate point cloud data indicating peripheral object information such as distance information and reflectance information.

### PRIOR ART DOCUMENTS

### PATENT LITERATURE

Patent Literature 1: JP2018-009831A

### SUMMARY

### PROBLEM TO BE SOLVED BY THE INVENTION

When generating three-dimensional data of a target object of measurement using a plurality of measurement devices such as a lidar, holes (missing parts) could occur in the three-dimensional data due to the presence of the blind spot of the measurement devices or the presence of a part to be sparsely measured depending on the measurement angle.

The present disclosure has been made to solve the above issues, and it is an object of the present invention to provide an information processing device capable of suitably generating interpolation data for interpolating the three-dimensional data of a target object of measurement.

### MEANS FOR SOLVING THE PROBLEM

One invention is an information processing device including:
an acquisition unit configured to acquire three-dimensional data of a target object of measurement generated based on measurement data, which is generated by plural measurement device configured to measure a space where the target object of measurement is placed;
a detection unit configured to detect an interpolation target spot which is missing in the three-dimensional data;
a candidate position determination unit configured to determine, based on a gradient angle of the target object of measurement with respect to each of plural directions at the interpolation target spot, a candidate position to interpolate the interpolation target spot with respect to each of the plural directions; and
an interpolation data generation unit configured to generate interpolation data of the three-dimensional data corresponding to the interpolation target spot based on the candidate position.

Another invention is a control method executed by a computer, the control method including:
acquiring three-dimensional data of a target object of measurement generated based on measurement data, which is generated by plural measurement device configured to measure a space where the target object of measurement is placed;
detecting an interpolation target spot which is missing in the three-dimensional data;
determining, based on a gradient angle of the target object of measurement with respect to each of plural directions at the interpolation target spot, a candidate position to interpolate the interpolation target spot with respect to each of the plural directions; and
generating interpolation data of the three-dimensional data corresponding to the interpolation target spot based on the candidate position.

Still another invention is a program causing a computer to:
acquire three-dimensional data of a target object of measurement generated based on measurement data, which is generated by plural measurement device configured to measure a space where the target object of measurement is placed;
detect an interpolation target spot which is missing in the three-dimensional data;
determine, based on a gradient angle of the target object of measurement with respect to each of plural directions at the interpolation target spot, a candidate position to interpolate the interpolation target spot with respect to each of the plural directions; and
generate interpolation data of the three-dimensional data corresponding to the interpolation target spot based on the candidate position.

### BRIEF DESCRIPTION OF THE DRAWINGS

[FIG. 1] It illustrates a schematic configuration of a three-dimensional data generation system according to an embodiment.
[FIG. 2] It illustrates an example of installment of a lidar in a space where a target object of measurement exists.
[FIG. 3] It is a block diagram showing an example of a hardware configuration of an information processing device.
[FIGS. 4A and 4B] Each is a diagram showing a three-dimensional data of the pile based on the point cloud data outputted by lidar.
[FIG. 5] It is a diagram showing an interpolation target grid and its neighboring grids.
[FIG. 6] It is a diagram showing a measurement height and candidate height in a cross section along a certain direction.
[FIG. 7] It is an example of a flowchart in the embodiment.
[FIG. 8] It illustrates a plane view of the measured points of the target object of measurement with an indication of analysis areas to be set in a second calculation example and a third calculation example of the gradient angle.
[FIG. 9] It illustrates a perspective view of the measured points of the target object of measurement with an indication of "vertically elongated analysis area" corresponding to the first analysis area shown in FIG. 8.
[FIG. 10] It illustrates grid points in the first analysis area used in the principal component analysis (or linear approximation or polynomial approximation) in the cross-section view of the target object of measurement shown in FIG. 9 along the first scan direction.

### DETAILED DESCRIPTION OF PREFERRED EMBODIMENTS

According to a preferred embodiment of the present invention, an information processing device includes: an acquisition unit configured to acquire three-dimensional data of a target object of measurement generated based on measurement data, which is generated by plural measurement device configured to measure a space where the target object of measurement is placed; a detection unit configured to detect an interpolation target spot which is missing in the three-dimensional data; a candidate position determination unit configured to determine, based on a gradient angle of the target object of measurement with respect to each of plural directions at the interpolation target spot, a candidate position to interpolate the interpolation target spot with respect to each of the plural directions; and an interpolation data generation unit configured to generate interpolation data corresponding to the interpolation target spot based on the candidate position. According to this aspect, the information processing device can suitably generate interpolation data of the three-dimensional data of the target object of measurement measured by plural measurement devices.

In one aspect of the information processing device, the candidate position determination unit is configured to estimate the gradient angle in an arbitrary direction from the plural direction, based on measured positions of the target object of measurement based on the measurement data at positions along the arbitrary direction. According to this aspect, the information processing device can accurately estimate the gradient angle for each direction. In some embodiments, the candidate position determination unit is configured to calculate the gradient angle based on any one of a principal component analysis, a linear approximation, or a polynomial approximation.

In another aspect of the information processing device, the candidate position determination unit is configured to determine the gradient angle based on an inclination of an inclined plane of the target object of measurement stored in a storage unit. According to this aspect, the information processing device can accurately determine the gradient angle for each direction.

In still another aspect of the information processing device, the interpolation data generation unit is configured to generate the interpolation data based on a candidate position which is a highest position among the candidate positions for each interpolation target spot. According to this aspect, the information processing device generate highly accurate interpolation data even if the interpolation target spot is a valley or the like of the target object of measurement.

In still another aspect of the information processing device, the information processing device further includes a division unit configured to divide a horizontal plane of a space indicated by the three-dimensional data into grids, wherein the detection unit is configured to detect, as the interpolation target spot, a grid in which a measured position indicated by the measurement data does not exist. According to this aspect, the information processing device can accurately detect the interpolation target spot. In some embodiments, the plural directions are directions on the horizontal plane, and are determined based on directions in which the grids are arranged vertically, horizontally, or diagonally.

In still another aspect of the information processing device, the target object of measurement is a pile in which plural mounds are formed. When a pile in which a plurality of mounds are formed is used as a target object of measurement, a blind spot of a measurement device occurs in a valley part between mounds. In this case, the information processing device can suitably generate interpolation data accurately representing the blind spot. In some embodiment, the target object of measurement is a pile of powder substances.

According to another preferred embodiment of the present invention, there is provided a control method executed by a computer, the control method including: acquiring three-dimensional data of a target object of measurement generated based on measurement data, which is generated by plural measurement device configured to measure a space where the target object of measurement is placed; detecting an interpolation target spot which is missing in the three-dimensional data; determining, based on a gradient angle of the target object of measurement with respect to each of plural directions at the interpolation target spot, a candidate position to interpolate the interpolation target spot with respect to each of the plural directions; and generating interpolation data corresponding to the interpolation target spot based on the candidate position. By executing this control method, the computer can suitably generate the interpolation data of the three-dimensional data of the target object of measurement measured by plural measurement devices.

According to still another preferred embodiment of the present invention, there is provided a program causing a computer to: acquire three-dimensional data of a target object of measurement generated based on measurement data, which is generated by plural measurement device configured to measure a space where the target object of measurement is placed; detect an interpolation target spot which is missing in the three-dimensional data; determine, based on a gradient angle of the target object of measurement with respect to each of plural directions at the interpolation target spot, a candidate position to interpolate the interpolation target spot with respect to each of the plural directions; and generate interpolation data corresponding to the interpolation target spot based on the candidate position. By executing the program, the computer can suitably generate the interpolation data of the three-dimensional data of the target object of measurement measured by plural measurement devices. In some embodiments, the program is stored in a storage medium.

### EMBODIMENTS

Hereinafter, a preferred embodiment of the present invention are described below with reference to drawings.

### (1) Outline of 3D Data Generation System

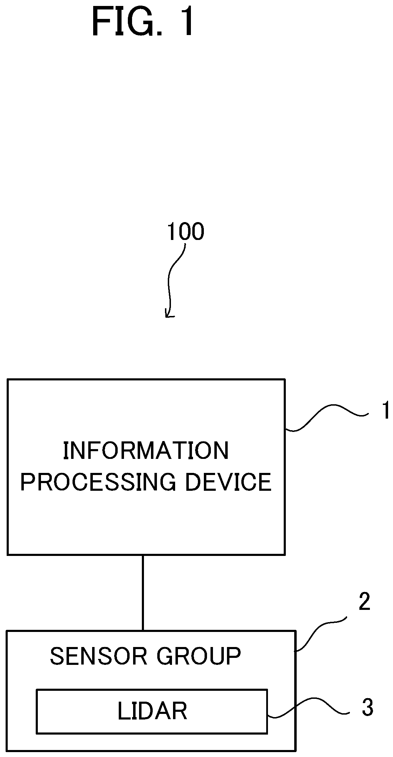

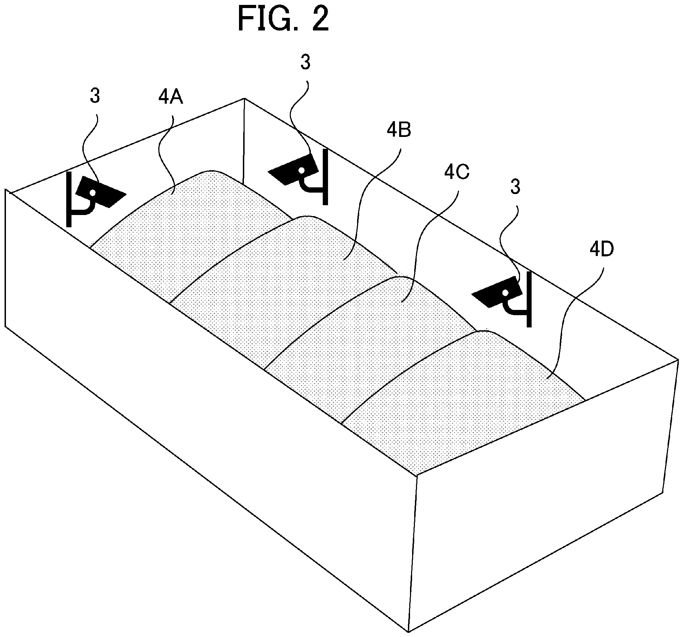

FIG. 1 is a schematic configuration of a three-dimensional data generation system 100 according to the embodiment. The three-dimensional data generation system 100 is a system configured to generate three-dimensional data of a target object of measurement, and includes an information processing device 1, which performs a process on data generated by a sensor group 2, and the sensor group 2 which at least includes lidars (Lidar: Light Detection and Ranging, or Laser Illuminated Detection And Ranging) 3. FIG. 2 shows an installation example of the lidars 3 in a space where the target object of measurement is present. In this example, the pile 4 stored in a warehouse is a target object of measurement. The pile 4 is piled granular material such as gypsum, and a plurality of mounds 4A to 4D are formed in series. A plurality of the lidars 3 is installed in the warehouse so as to measure the entire pile 4.

The information processing device 1 is electrically connected to the sensor group 2 and processes data outputted by various sensors included in the sensor group 2. In this example, the information processing device 1 generates, as three-dimensional data representing the three-dimensional shape of the target object of measurement, point cloud data (also referred to as "integrated point cloud data") obtained by integrating (accumulating) the point cloud data outputted by a plurality of installed lidars 3. For example, the integrated point cloud data is data which expresses measured positions of the target object of measurement as points in a three-dimensional coordinate system (also referred to as "reference coordinate system") which uses a predetermined position in the space of the warehouse as its origin. When integrating data outputted from the plurality of lidars 3, the information processing device 1 transforms the point cloud data outputted by each lidar 3 based on the installation position and posture of each lidar 3 measured in advance and then adds up each data in the reference coordinate system after the transformation. Hereafter, the X-axis and Y-axis of reference coordinate system are parallel to the horizontal plane and the Z-axis of the reference coordinate system is along with the vertical height direction perpendicular to the horizontal plane. In some embodiments, the information processing device 1 may perform the integration (synthesis) of the point cloud data outputted by the lidars 3 based on any technique which is not limited to the above-described example.

A lidar 3 discretely measures the distance to an external object by emitting a pulse laser which is an infrared laser while changing the emitting angle within a predetermined angle range (field of view) in the horizontal and vertical directions. In this case, the lidar 3 is equipped with a radiation unit for radiating a laser light while changing the irradiation direction (i.e., the scanning direction), a light receiving unit for receiving the reflected light (scattered light) of the radiated laser light, and an output unit for outputting data based on the received light signal outputted by the light receiving unit. The measurement data generated by the lidar 3 for each irradiation direction of the pulsed laser is generated based on the irradiation direction corresponding to the laser light received by the light receiving unit and the response delay time (i.e., Time of Flight) of the laser light which is identified by the received light signal described above. Then, for each scanning cycle, the lidar generates generates a frame of point cloud data that is data cloud corresponding to irradiated points in the field of view of the lidar 3 (i.e., the irradiation range of the pulse laser). The lidar 3 is an example of the "measurement device" in the present invention. The lidar 3 is not limited to the above-described scan type lidar and may be a flash type lidar configured to generate three-dimensional data by diffusing and radiating a laser light to the field of view of the two-dimensional sensor array. Hereafter, the point (and its measurement data) measured through irradiation with the pulse laser emitted by the radiation unit is also referred to as "measured point".

In this example, a required number of the lidars 3 are installed so as to include the entire pile 4 in the entire field of view obtained by combining the field of view of each lidar 3. Each lidar 3 is provided at a position to overview the pile 4.

The sensor group 2 may include various external sensors or/and internal sensors in addition to the lidars 3. For example, the sensor group 2 may include a GNSS (Global Navigation Satellite System) receiver or the like required to generate the position data.

### (2) Configuration of Information Processing Device

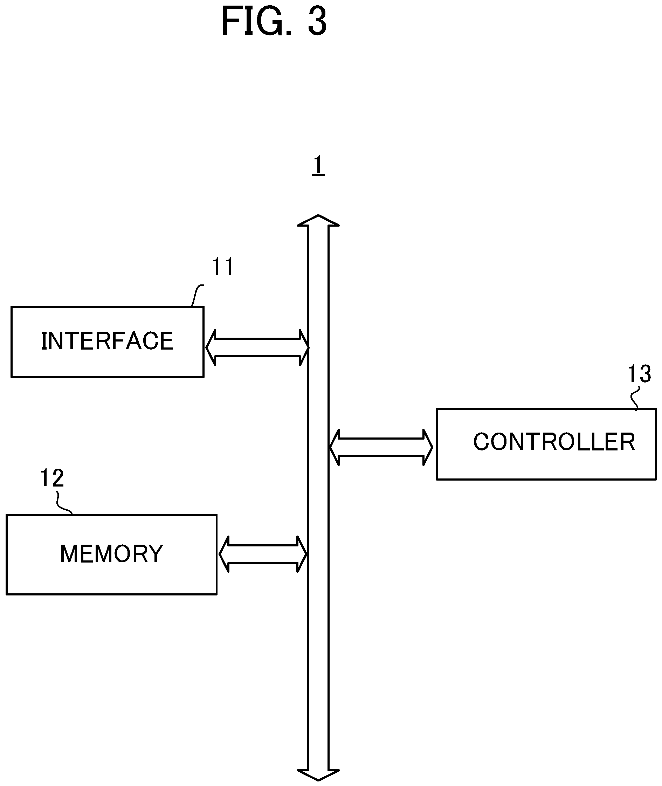

FIG. 3 is a block diagram illustrating an example of a hardware configuration of the information processing device 1. The information processing device 1 mainly includes an interface 11, a memory 12, and a controller 13. Each of these elements is connected to each other through a bus line.

The interface 11 performs an interface operation related to the transfer of data between the information processing device 1 and any external device. In this example, the interface 11 acquires the output data from the sensor group 2 such as the lidars 3, and supplies it to the controller 13. Examples of the interface 11 include a wireless interface, such as a network adapter, for performing wireless communication, and a hardware interface, such as a cable, for connecting to an external device. The interface 11 may also perform interface operations with various peripheral devices such as an input device, a display device, a sound output device, and the like.

The memory 12 is configured by various volatile and non-volatile memories such as a RAM (Random Access Memory), a ROM (Read Only Memory), a hard disk drive, a flash memory, and the like. The memory 12 stores a program for the controller 13 to perform a predetermined process. The program executed by the controller 13 may be stored in a storage medium other than the memory 12. Further, the memory 12 stores integrated point cloud data and interpolation data which are three-dimensional data of the pile 4 generated by the controller 13.

The controller 13 includes one or more processors, such as a CPU (Central Processing Unit), a GPU (Graphics Processing Unit), and a TPU (Tensor Processing Unit), and controls the entire information processing unit 1. In this case, the controller 13 executes a program stored in the memory 12 or the like to perform various processing described later. In this example, based on the point cloud data outputted by the lidars 3, the controller 13 generates the integrated point cloud data which is three-dimensional data of the pile 4. Furthermore, the controller 13 detects a spot (also referred to as "interpolation target spot") where the data is missing in the generated integrated point cloud data as an interpolation target, and generates interpolation data representing the position of the pile 4 to be estimated at the detected interpolation target spot.

The controller 13 functions as the "acquisition unit", "detection unit", "candidate position determination unit", "interpolation data generation unit", and a computer configured to execute the program.

The process performed by the controller 13 is not limited to being implemented in software by a program, but may be implemented by any combination of hardware, firmware, and software. The process performed by the controllers 13 may also be implemented using any user programmable integrated circuit such as a FPGA (Field-Programmable Gate Array) and a microcomputer, for example. In this case, the integrated circuit may be used to implement a program that the controller 13 executes in this example.

### (3) Generation of Interpolation Data

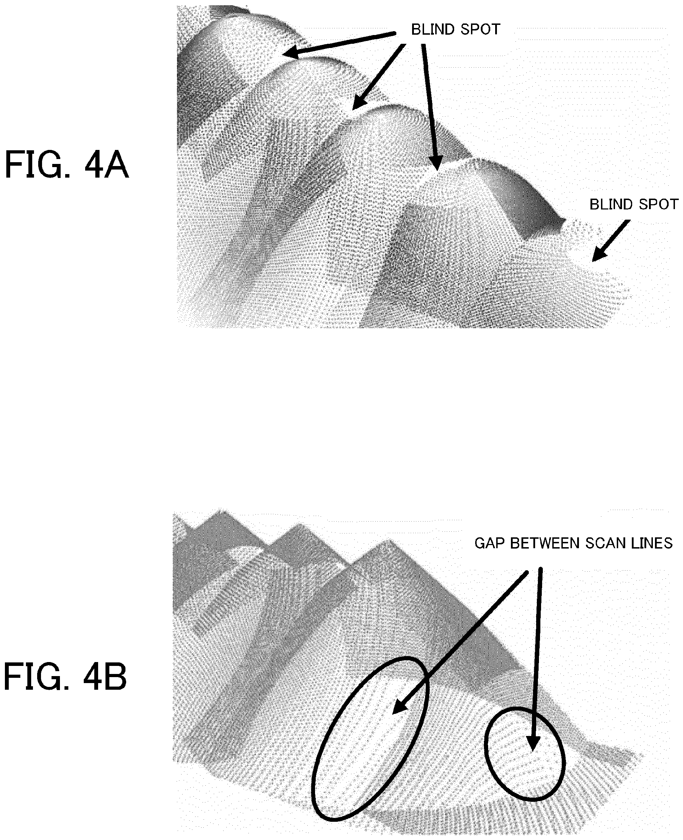

First, a description will be given of the interpolation target spot with reference to FIG. 4A and FIG. 4B. FIGS. 4 A and 4B each is a diagram showing the integrated point cloud data of the pile 4 based on the point cloud data outputted by the lidars 3. Here, in FIG. 4A, there is a data-missing part due to the presence of the valley part formed between mounds which becomes a blind spot of the lidars 3. Further, in FIG. 4B, there is a data-missing part due to the large gap between the vertical adjacent scanning lines of the lidars 3. Thus, although the gap between adjacent scanning lines is not originally a blind spot, it becomes an area that cannot be measured.

As described above, when the lidars 3 are fixedly installed, missing parts (holes) in the integrated point cloud data obtained by integrating the point cloud data each lidar 3 outputs could occur. Therefore, the information processing device 1 detects such a part as an interpolation target spot and generates interpolation data corresponding to the interpolation target spot.

Next, a description will be given of a specific method of generating interpolation data. after dividing the X-Y plane into predetermined-size grids, the information processing device 1 calculates a height with respect to each grid based on the integrated point cloud data. Then, the information processing device 1 detects a grid, in which any measured point of the integrated point cloud data does not exist, as an interpolation target spot, and then estimates the height for each interpolation target spot, on the basis of the gradient angles of the pile 4 estimated in respective directions. In the following, a grid to be an interpolation target spot is referred to as the "interpolation target grid". In addition, the height of the pile 4 with respect to each grid specified based on the integrated point cloud data is referred to as the "measurement height", and the estimated height of the interpolation target grid in the pile 4 is referred to as the "estimated height".

First, the information processing device 1 divides the X-Y plane (i.e., the horizontal plane) of the space in which the pile 4 as the target object of measurement exists into predetermined-size grids by placing a mesh at predetermined intervals for the X-axis and Y-axis. The size of the grids in this instance is, for example, 20 cm or 10 cm, and is determined according to the required resolution of the three-dimensional data of the pile 4.

Next, the information processing device 1 divides the integrated point cloud data into data in units of grids, and calculates the measurement height with respect to each grid based on the integrated point cloud data. Here, the information processing device 1 calculates the measurement height obtained by averaging the height of each measured point in the each grid.

Next, the information processing device 1 detects a grid (i.e., a grid for which the measurement height cannot be calculated) in which there is no measured point as an interpolation target grid. Then, the information processing device 1 calculates the estimated height of the interpolation target grid, based on gradient angles of the pile 4 in a plurality of directions and the heights estimated from the respective gradient angles. The height of the pile 4 estimated from the gradient angle with respect to each direction is a candidate for the estimated height, and is also referred to as "candidate height" hereafter.

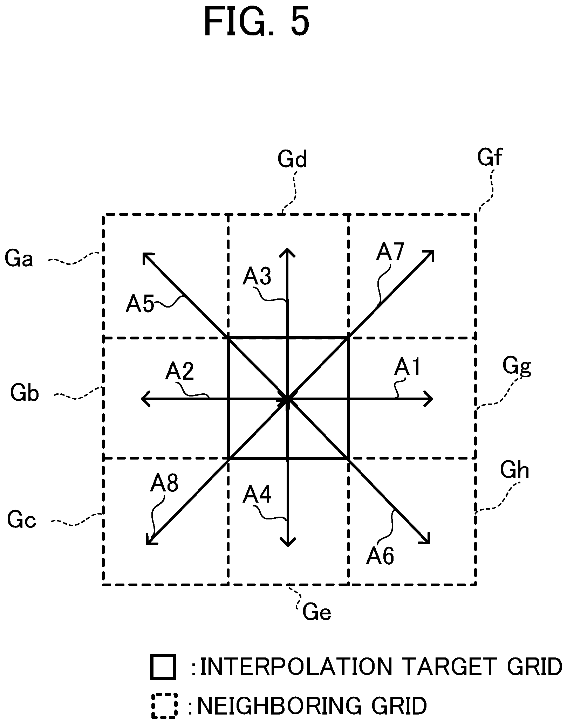

FIG. 5 illustrates an interpolation target grid and neighboring grids Ga to Gh adjoining thereto. In the present embodiment, the information processing device 1 obtains the gradient angles of the pile 4 at the interpolation target grid with respect to: two directions along the longitudinal direction as shown by the arrows A1 and A2; two directions along the lateral direction as shown by the arrows A3 and A4; and four directions along the oblique directions as shown by the arrows A5 to A8. The calculation method of the gradient angle will be described later. Then, the information processing device 1 calculates the candidate heights for respective directions based on the corresponding gradient angles and determines the estimated height from the candidate heights for respective directions. In this instance, on the assumption that each mound 4 is formed at a substantially constant gradient angle, the information processing device 1 calculates the above-described gradient angle and the candidate height for an arbitrary direction on the basis of the measurement heights and X-Y coordinate positions of the other grids existing at positions along the arbitrary direction.

For example, in the case of determining the candidate height in the direction along the arrow A1, the information processing device 1 acquires the measurement heights and X-Y coordinate positions of a predetermined number of neighboring grids (grids including the grid Gg) which exist in the direction along the arrow A1. Then, based on acquired measurement heights and X-Y coordinate positions (e.g., the grid center position) of the grids, the information processing device 1 estimates the gradient angle and the candidate height in the direction along the arrow A1 according to the geometric calculation method.

Then, the information processing device 1 calculates the candidate heights corresponding to the directions along the respective arrows A1 to A8, and selects a candidate height indicating the highest position among the calculated candidate heights as the estimated height in the interpolation target grid. According to this method, the information processing device 1 can estimate the height with high accuracy even for such an interpolation target grid near a valley between mounds of the pile 4.

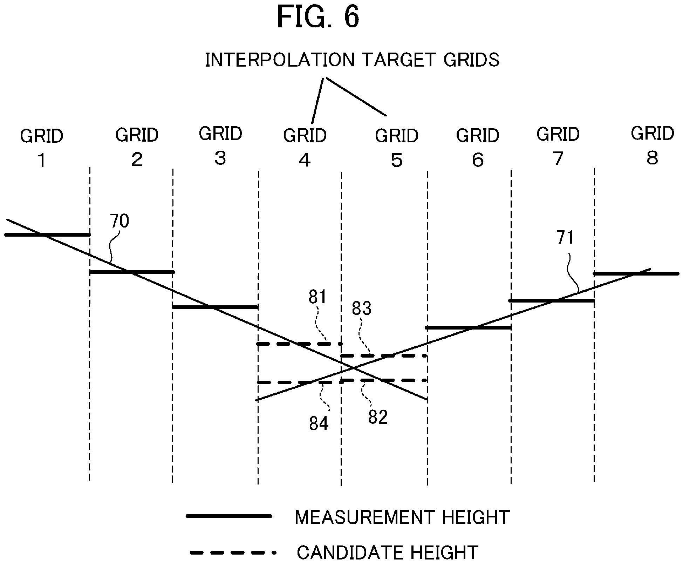

FIG. 6 illustrates the measurement height and the candidate height in the cross section along two parallel directions selected from the arrows A1 to A8. FIG. 6 shows grids 1 to 8 near a valley between mounds of the pile 4. Here, among the grids 1 to 8, the grid 4 and the grid 5 correspond to interpolation target grids, and the grids 1 to 3 and the grids 6 to 8 correspond to their neighboring grids. The line 70 shows the estimated gradient angle of the pile 4 based on the measurement heights and X-Y coordinate positions of grids 1-3, and the line 71 shows the estimated gradient angle of the pile 4 based on the measurement heights and X-Y coordinate positions of the grids 6 to 8. Hereafter, the direction from the interpolation target grid to the grids 1 to 3 is referred to as the "first direction", and the direction from the interpolation target grid to the grids 6 to 8 is referred to as the "second direction".

In this instance, the information processing device 1 calculates the gradient angle (see the line 70) of the pile 4 estimated based on the measurement heights and X-Y coordinate positions of the grids 1 to 3 for the first direction in which the grids 1 to 3 exist, and calculates the candidate height 81 of the grids 4 and the candidate height 82 of the grids 5 in the first direction based on the gradient angle. Similarly, the information processing device 1 calculates the gradient angle (see the line 71) of the pile 4 estimated based on the measurement heights and X-Y coordinate positions of the grids 6 to 8 for the second direction in which the grids 6 to 8 exist, and calculates the candidate height 83 of the grids 5 and the candidate height 84 of the grids 4 in the second direction based on the gradient angle. In this way, the information processing device 1 calculates the candidate heights of the grid 4 and the grid 5 for all the directions including the first direction and the second direction.

Then, the information processing device 1 determines a candidate height (the candidate height 81 in FIG. 6) that is the highest position in the grid 4 and a candidate height (the candidate height 83 in FIG. 6) that is the highest position in the grid 5, as the estimated height in each grid. Then, the information processing device 1 generates interpolation data indicating the estimated high of the interpolation target grid and stores it in the memory 12 in association with the integrated point cloud data.

As described above, the information processing device 1 calculates the candidate heights of the interpolation target grid in a plurality of directions based on the measurement heights of the other grids, and determines the highest candidate height among them as the estimated height of the interpolation target grid. Thus, it is possible to accurately calculate the estimated high of the interpolation target grid existing in the vicinity of the valley of the pile 4.

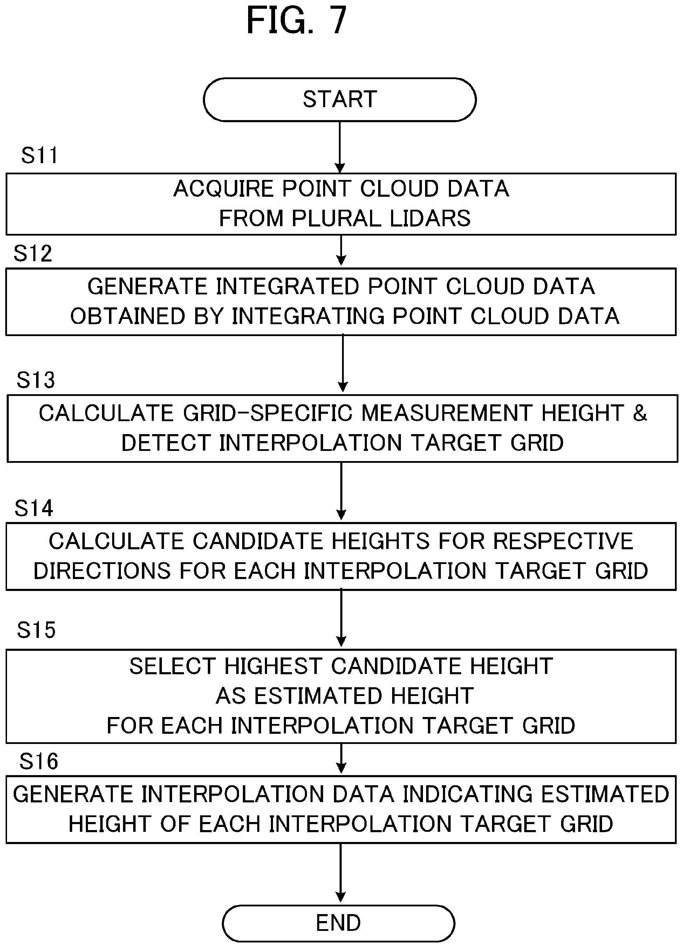

FIG. 7 is an example of a flowchart that is executed by the information processing device 1 in the present embodiment.

First, the information processing device 1 acquires each point cloud data from a plurality of lidars 3 (step S11). Then, the information processing device 1 generates the integrated point cloud data obtained by integrating the point cloud data acquired from the plurality of lidars 3 (step S12). In this case, the information processing device 1 transforms each point cloud data outputted from the lidars 3 into data in the reference coordinate system, and acquires the data obtained by integrating the transformed point cloud data as the integrated point cloud data.

Next, the information processing device 1 divides the space of the reference coordinate system into predetermined-size grids on the horizontal plane, and then calculates a measurement height with respect to each grid based on the integrated point cloud data, and detects a grid for which the measurement height cannot be calculated as the interpolation target grid (step S 13).

Then, for each interpolation target grid, the information processing device 1 calculates the candidate height with respect to each direction (step S14). In this case, the information processing device 1 sets a candidate height for each of the eight directions shown in FIG. 5 for each interpolation target grid.

Then, for each interpolation target grid, the information processing device 1 determines the highest candidate height as the estimated height (step S15). Then, the information processing device 1 generates interpolation data indicating the estimated high for each interpolation target grid (step S16).

### (4) Calculation Method of Gradient Angle

Next, specific examples (the first calculation example to the third calculation example) of a method of calculating the gradient angle will be specifically described.

The first calculation example is a method based on a pre-measurement, in which the inclination of the inclined plane of the mound formed when the target object of measurement is naturally stacked (such as when dropping the target object of measurement with a device or the like from above) is measured in advance, and the measured value is stored in advance in the memory 12 of the information processing device 1. In this case, pre-measurement for each type of the target object of measurement is conducted, and the measurement results of the gradient angles are stored in the form of a table or the like in the memory 12. In this case, by referring to the memory 12, the information processing device 1 can suitably calculate the gradient angle.

The second calculation example is a method using principal component analysis, in which the information processing device 1 sets an interpolation target spot as an attention grid in order, and then sets an analysis area (an area having a width and a thickness in the scan direction) which is elongated along the vertical direction with respect to the direction of scanning whether or not there is a grid, and performs principal component analysis on a set of grid points included in the analysis area. Then, the information processing device 1 calculates, as the gradient angle at the scan direction in the attention grid, the gradient when the eigenvalue of the second principal component and eigenvalue of the third principal component become small (i.e., the distribution of the grid points can be determined to be linear). In this case, when the distribution of grid points is not determined to be linear, it is excluded from the target of interpolation calculation. In some embodiments, upon determining that the calculated gradient is up-slope with respect to the attention grid, it may be excluded from the target of interpolation calculation.

The third calculation example is a method using a linear approximation or a polynomial approximation. In this method, for the attention grid set in the same way as the second calculation example, the information processing device 1 sets an analysis area (an area having a width and a thickness in the scan direction) which is elongated along the vertical direction with respect to the direction of scanning whether or not there is a grid, and then applies linear approximation or polynomial approximation to a set of grid points included in the analysis area. It calculates the slope of the straight line as the gradient angle at the scan direction in the attention grid in the case of linear approximation, while it calculates the slope of the tangent at the end point of the approximate curve in the polynomial approximation as the gradient angle at the scan direction in the attention grid in the case of polynomial approximation. In the case of up slope with respect to the target grid, it may be excluded from the interpolation calculation. In some embodiments, upon determining that the calculated gradient is up-slope with respect to the attention grid, it may be excluded from the target of interpolation calculation.

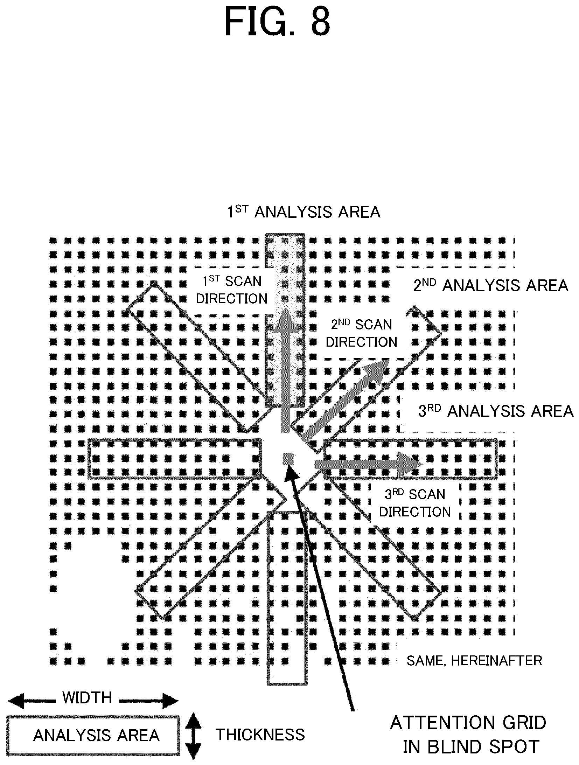

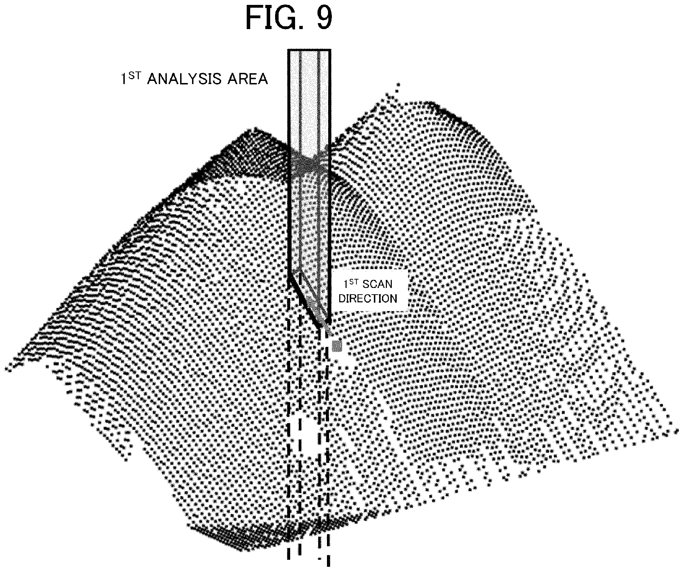

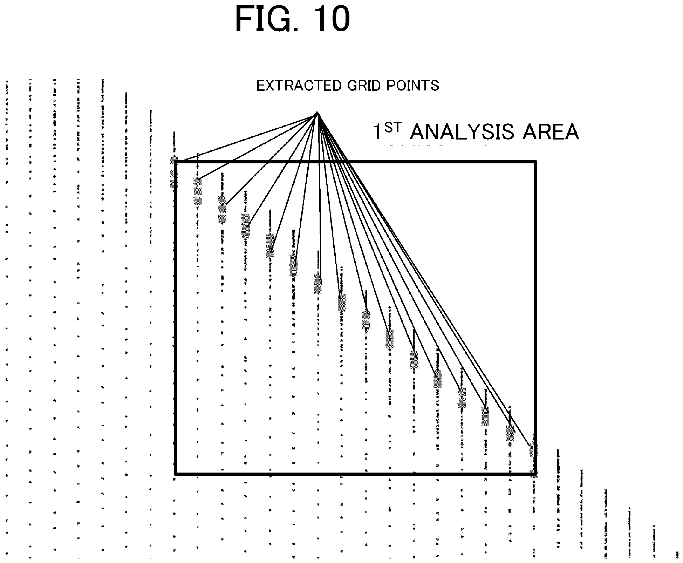

FIG. 8 illustrates a plane view of the measured points of the target object of measurement with an indication of analysis areas to be set in a second calculation example and a third calculation example. It illustrates a perspective view of the measured points of the target object of measurement with an indication of "vertically elongated analysis area" corresponding to the first analysis area shown in FIG. 8. Furthermore, FIG. 10 illustrates grid points in the first analysis area used in the principal component analysis (or linear approximation or polynomial approximation) in the cross-section view of the target object of measurement shown in FIG. 9 along the first scan direction.

Here, the second calculation method will be supplemented. In the second calculation method, the information processing device 1 calculates the covariance matrix for the set of grid points distributed in the space by principal component analysis, and then applies eigenvalue analysis to the covariance matrix to thereby obtain three eigenvectors (vectors orthogonal to each other) and three eigenvalues corresponding to the respective three eigenvectors. The magnitude of the eigenvalue represents the distribution state of points with respect to the direction of the corresponding eigenvector. When the points are linearly distributed, only the first component protrusively becomes a large value (i.e., the second component and the third component become small values). Therefore, the information processing device 1 calculates the angle formed between the direction of the eigenvector corresponding to the first component and the X-Y plane as the gradient angle.

Next, the third calculation method will be supplementally described. In the third calculation method, based on the linear approximation or the polynomial approximation, the information processing device 1 approximates a set of grid points distributed in the space by a linear equation (i.e., a primary expression) or a polynomial equation using the least squares method. Then, the information processing device 1 calculates the angle formed between the direction vector of the straight line and the X-Y plane as the gradient angle in the case of the linear approximation, and calculates the angle formed between the direction vector of the tangent at the end point of the approximate curve and the X-Y plane as the gradient angle in the case of the polynomial approximation.

### (4) Modification

The directions in which the candidate heights are calculated for the interpolation target grid are not limited to the eight directions indicated by the arrows A1 to A8 shown in FIG. 5 in which the grids are arranged vertically, horizontally, or diagonally. Alternatively, for example, the information processing device 1 may candidate heights in the vertical and horizontal four direction as indicated by the arrows A1 to A4 in FIG. 5, or may calculate the candidate heights in the four direction as indicated by the arrows A5 to A8. In this way, the information processing device 1 calculates the candidate heights in a plurality of directions on the horizontal plane, and selects the highest candidate height as the estimated height. Thus, it is possible to calculate the estimated height with a high precision even for the interpolation target grid in the vicinity of the valley of the pile 4.

As described above, the controller 13 of the information processing device 1 according to the present embodiment is configured to acquire integrated point cloud data which is three-dimensional data of a target object of measurement generated based on point cloud data, which is generated by a plurality of lidars 3 configured to measure a space where the target object of measurement is placed. Then, the controller 13 detects an interpolation target grid which is missing in the integrated point cloud data. Then, based on a gradient angle of the target object of measurement with respect to each of plural directions at the interpolation target spot, the controller 13 is configured to determine a candidate height to interpolate the interpolation target grid with respect to each of the plural directions. Then, the controller 13 is configured to generate interpolation data corresponding to the interpolation target grid based on the candidate height. Thus, the information processing device 1 can suitably generate interpolation data to interpolate the holes of the three-dimensional data of the target object of measurement generated due to the blind spot of the lidar 3 or the like.

In the embodiments described above, the program is stored by any type of a non-transitory computer-readable medium (non-transitory computer readable medium) and can be supplied to a control unit or the like that is a computer. The non-transitory computer-readable medium include any type of a tangible storage medium. Examples of the non-transitory computer readable medium include a magnetic storage medium (e.g., a flexible disk, a magnetic tape, a hard disk drive), a magnetic-optical storage medium (e.g., a magnetic optical disk), CD-ROM (Read Only Memory), CD-R, CD-R/W, a solid-state memory (e.g., a mask ROM, a PROM (Programmable ROM), an EPROM (Erasable PROM), a flash ROM, a RAM (Random Access Memory)).

While the present invention has been described with reference to the embodiments, the present invention is not limited to the above embodiments. Various modifications that can be understood by a person skilled in the art can be made to the configuration and details of the present invention within the scope of the present invention. Namely, the present invention includes, of course, various modifications that may be made by a person skilled in the art according to the entire disclosure including claims and technical ideas. In addition, all Patent and Non-Patent Literatures mentioned in this specification are incorporated by reference in its entirety.

### DESCRIPTION OF REFERENCE NUMERALS

- 1: Information processing device
- 2: Sensor group
- 3: Lidar
- 100: Three-dimensional data generation system

## Claims

1. An information processing device comprising:
an acquisition unit configured to acquire three-dimensional data of a target object of measurement generated based on measurement data, which is generated by plural measurement device configured to measure a space where the target object of measurement is placed;
a detection unit configured to detect an interpolation target spot which is missing in the three-dimensional data;
a candidate position determination unit configured to determine, based on a gradient angle of the target object of measurement with respect to each of plural directions at the interpolation target spot, a candidate position to interpolate the interpolation target spot with respect to each of the plural directions; and
an interpolation data generation unit configured to generate interpolation data of the three-dimensional data corresponding to the interpolation target spot based on the candidate position.

2. The information processing device according to claim 1,
wherein the candidate position determination unit is configured to estimate the gradient angle in an arbitrary direction from the plural direction, based on measured positions of the target object of measurement based on the measurement data at positions along the arbitrary direction.

3. The information processing device according to claim 2,
wherein the candidate position determination unit is configured to calculate the gradient angle based on any one of a principal component analysis, a linear approximation, or a polynomial approximation.

4. The information processing device according to claim 1,
wherein the candidate position determination unit is configured to determine the gradient angle based on an inclination of an inclined plane of the target object of measurement stored in a storage unit.

5. The information processing device according to any one of claims 1 to 4,
wherein the interpolation data generation unit is configured to generate the interpolation data based on a candidate position which is a highest position among the candidate positions for each interpolation target spot.

6. The information processing device according to any one of claims 1 to 5, further comprising
a division unit configured to divide a horizontal plane of a space indicated by the three-dimensional data into grids,
wherein the detection unit is configured to detect, as the interpolation target spot, a grid in which a measured position indicated by the measurement data does not exist.

7. The information processing device according to claim 6,
wherein the plural directions are directions on the horizontal plane, and are determined based on directions in which the grids are arranged vertically, horizontally, or diagonally.

8. The information processing device according to any one of claims 1 to 7,
wherein the target object of measurement is a pile in which plural mounds are formed.

9. The information processing device according to claim 8,
wherein the target object of measurement is a pile of powder substances.

10. A control method executed by a computer, the control method comprising:
acquiring three-dimensional data of a target object of measurement generated based on measurement data, which is generated by plural measurement device configured to measure a space where the target object of measurement is placed;
detecting an interpolation target spot which is missing in the three-dimensional data;
determining, based on a gradient angle of the target object of measurement with respect to each of plural directions at the interpolation target spot, a candidate position to interpolate the interpolation target spot with respect to each of the plural directions; and
generating interpolation data of the three-dimensional data corresponding to the interpolation target spot based on the candidate position.

11. A program causing a computer to:
acquire three-dimensional data of a target object of measurement generated based on measurement data, which is generated by plural measurement device configured to measure a space where the target object of measurement is placed;
detect an interpolation target spot which is missing in the three-dimensional data;
determine, based on a gradient angle of the target object of measurement with respect to each of plural directions at the interpolation target spot, a candidate position to interpolate the interpolation target spot with respect to each of the plural directions; and
generate interpolation data of the three-dimensional data corresponding to the interpolation target spot based on the candidate position.

12. A storage medium storing the program according to claim 11.
